# EUROPÄISCHE PATENTSCHRIFT

(11) **EP 1 895 258 B1**
(45) Veröffentlichungstag und Bekanntmachung des Hinweises auf die Patenterteilung: **25.07.2018**
(21) Anmeldenummer: 07113393.8
(22) Anmeldetag: 30.07.2007
(51) Int. Cl.: F28D 7/16, F28F 9/00, F28F 21/06

(54) **Ladeluftkühler**
Charge air cooler
Refroidisseur d'air de suralimentation

(30) Priorität: 31.08.2006 DE 102006040851
(43) Veröffentlichungstag der Anmeldung: 05.03.2008
(73) Patentinhaber: Mahle International GmbH, 70376 Stuttgart (DE)
(72) Erfinder: BEETZ, Dr. Klaus, 76149, Karlsruhe (DE); DRESPLING, Hans-Peter, 89522, Heidenheim (DE)
(74) Vertreter: BRP Renaud & Partner mbB Rechtsanwälte Patentanwälte Steuerberater

(56) Entgegenhaltungen:
- EP-A1- 1 048 839
- EP-A2- 1 348 924
- DE-A1- 2 617 208
- DE-A1- 2 749 205
- DE-A1- 2 813 767
- DE-A1- 19 902 504
- DE-B1- 2 612 514
- US-A- 3 272 259
- US-A- 3 804 161
- US-A- 5 004 042
- US-A- 5 323 849
- US-A- 5 865 244
- US-B1- 6 899 169

## Beschreibung

Die Erfindung betrifft einen Ladeluftkühler mit einem Gehäuse, in welchem erste Strömungskanäle für zu kühlendes Gas und davon getrennte zweite Strömungskanäle für ein Kühlmedium angeordnet sind.

Um die Leistung eines Verbrennungsmotors steigern zu können, werden bei aufgeladenen Brennkraftmaschinen, insbesondere bei Nutzfahrzeugen, Ladeluftkühler eingesetzt. Angeordnet ist ein derartiger Ladeluftkühler in einem Ansaugtrakt des Verbrennungsmotors stromab einer Ladeeinrichtung, z.B. einem Turbolader.

Aus der DE 103 02 948 A1 ist beispielsweise ein Wärmeübertrager, insbesondere ein Abgaskühler für Kraftfahrzeuge bekannt, der mit in einem Gehäuse angeordneten Strömungskanälen für ein zu kühlendes Gas und ein Kühlmittel ausgerüstet ist. Die Strömungskanäle für das Gas sind durch Rohrböden hindurch in einen Eintritts- und einen Austrittsdiffusor geführt, während das Kühlmittel über Kühlmittelanschlüsse durch das Gehäuse geführt ist. Dabei sind die Strömungskanäle für das Gas und das Kühlmittel durch ein, insbesondere mäanderförmig, umgeformtes Metallband um das Gehäuse, welche miteinander stoffschlüssig verbunden sind, gebildet. Die Einzelteile des Wärmeübertragers sind dabei aus Metall ausgebildet und miteinander verlötet.

Eine andere Wärmeübertragereinrichtung ist aus der US 5,323,849 bekannt. Dabei sind Rohre zur Ausbildung erster Strömungskanäle sowie ein Gehäuse aus Metall hergestellt. Zweite Strömungskanäle sind durch die Innenseiten des Gehäuses und die Außenseiten der Rohre begrenzt.

Weitere Wärmeübertragereinrichtungen sind beispielsweise aus der DE 103 02 708 A1, aus der DE 103 52 187 A1, aus der DE 100 57 190 A1 und aus der DE 101 46 258 A1 bekannt.

Aus der DE 26 17 208 A1 ist ein Wärmetauscher für künstliche Herz- und Lungenmaschinen bekannt, bei dem erste Strömungskanäle aus metallischen Hohlkörpern gebildet sind, während zweite Strömungskanäle durch Außenseiten der metallischen Hohlkörper, zwei Rohrböden sowie eine Innenseite des Gehäuses begrenzt sind.

Aus der DE 27 49 205 A1 ist es bekannt, bei einem Röhrenwärmetauscher wenigstens ein den Boden umfassender Teil des Sammelbehälters aus Kunststoff herzustellen, indem besagter Teil im Spritzgussverfahren um die Enden der Rohre herumgespritzt wird.

Die Erfindung beschäftigt sich mit dem Problem, für eine Wärmeübertragereinrichtung der eingangs genannten Art eine verbesserte oder zumindest eine andere Ausführungsform anzugeben, welche konstruktiv einfach und dadurch kostengünstig herzustellen ist.

Dieses Problem wird durch eine Wärmeübertragereinrichtung mit sämtlichen Merkmalen des Patentanspruchs 1 gelöst. Vorteilhafte und zweckmäßige Ausgestaltungen der Erfindung sind Gegenstand der abhängigen Unteransprüche.

Die Erfindung beruht auf dem allgemeinen Gedanken, eine bisher überwiegend komplett aus Metall ausgebildete und beim Herstellen verlötete Wärmeübertragereinrichtung nunmehr aus zumindest zwei unterschiedlichen Werkstoffen, nämlich Metall und Kunststoff, auszubilden, wobei der metallische Werkstoff für erste Strömungskanäle verwendet wird, die an ihren Längsendseiten zur Ausbildung eines gemeinsamen Rohrbodens mit Kunststoff umspritzt sind. Dies ermöglicht eine deutlich vereinfachte Fertigung der erfindungsgemäßen Wärmeübertragereinrichtung, bei welcher nunmehr nur noch die, die ersten Strömungskanäle bildenden, metallischen Hohlkörper in ein entsprechendes Spritzwerkzeug eingelegt werden müssen, in welchem die Längsendseiten der metallischen Hohlkörper mit einem alle Hohlkörper umfassenden Rohrboden umspritzt werden. Insbesondere kann dadurch ein üblicherweise bei aus metallischen Komponenten bestehenden Wärmeübertragereinrichtungen erforderliches Justieren, Verklammern und Verlöten der einzelnen Teile, eingespart werden, wodurch sich der Fertigungsprozess straffen und kostengünstiger realisieren lässt. Prinzipiell sind die ersten Strömungskanäle für den Transport von zu kühlendem Gas, Ladeluft, ausgebildet, während davon räumlich getrennte zweite Strömungskanäle für den Transport eines Kühlmediums vorgesehen sind. Die zweiten Strömungskanäle werden dabei durch Außenseiten der metallischen Hohlkörper der ersten Strömungskanäle, die beiden längsendseitig der ersten Strömungskanäle ausgebildeten Rohrböden sowie einer Innenseite des aus Kunststoff ausgebildeten Gehäuses begrenzt. Die Ausbildung des erfindungsgemäßen Wärmeübertragers aus zwei unterschiedlichen Werkstoffen vereinfacht dabei nicht nur den Herstellungsprozess der Wärmeübertragereinrichtung, sondern ermöglicht auch einen nahezu frei wählbare Formgebung, insbesondere der hauptsächlich aus Kunststoff ausgebildeten, zweiten Strömungskanäle bzw. des aus Kunststoff ausgebildeten Gehäuses, wodurch sich eine hohe konstruktive Freiheit ergibt.

Zweckmäßig sind zwei Seitenwände des Gehäuses an die beiden Rohrböden angespritzt, bspw. sind zwei Seitenwände zusammen mit den Rohrböden an die ersten Strömungskanäle angespritzt. Durch das Anspritzen bzw. das gleichzeitige Herstellen der Seitenwände und der Rohrböden entfällt ein späteres Verbinden dieser Einzelteile, wodurch eine Straffung der Fertigung erreicht werden kann.

Bei einer vorteilhaften Ausführungsform der erfindungsgemäßen Lösung ist zumindest ein Teil des Gehäuses ein Bestandteil einer Sauganlage einer Brennkraftmaschine. Um die Teilevielfalt weiter reduzieren zu können, ist angedacht, beispielsweise einen der Rohrböden, eine Seitenwand oder einen Deckel bzw. einen Boden der erfindungsgemäßen Wärmeübertragereinrichtung als Anschlussteil an die Sauganlage der Brennkraftmaschine auszubilden. Hierdurch lässt sich eine besonders kompakte und gleichzeitig eine leichtere Bauweise realisieren, was insbesondere im Hinblick auf ein immer enger werdendes Bauraumangebot in einem Motorraum von großem Vorteil ist.

Bei einer weiteren vorteilhaften Ausführungsform der erfindungsgemäßen Lösung sind die ersten Strömungskanäle aus Aluminium hergestellt. Dies bietet den Vorteil, dass Aluminium an der Luft sehr schnell eine nahezu undurchdringliche Oxidschicht ausbildet, welche das Aluminium sehr korrosionsbeständig macht. Da der zweite verwendete Werkstoff, nämlich Kunststoff keinerlei Korrosion aufweist, kann eine insgesamt sehr korrosionsbeständige Wärmeübertragereinrichtung durch die Verwendung des Leichtmetalls Aluminium geschaffen werden. Darüber hinaus weist Aluminium eine sehr hohe Wärmeleitfähigkeit auf, was insbesondere für den Wärmetausch in einer Wärmeübertragereinrichtung besonders erwünscht ist, um beispielsweise eine effiziente Kühlung der Ladeluft erreichen zu können. Selbstverständlich können hierbei auch Aluminiumlegierungen zum Einsatz kommen, welche vorgenannte Eigenschaften und/oder eine Verarbeitbarkeit zusätzlich verbessern.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine teilweise geschnittene Ansicht auf eine erfindungsgemäße Wärmeübertragereinrichtung,
- Fig. 2: eine Detailansicht auf den geschnitten Bereich der Wärmeübertragereinrichtung nach Fig. 1,
- Fig. 3: eine Ansicht auf eine mögliche Ausführungsform von ersten, metallischen Strömungskanälen,
- Fig. 4: eine Darstellung wie in Fig. 3, jedoch mit endseitig an den ersten Strömungskanälen angespritzten Rohrböden sowie Seitenwänden.

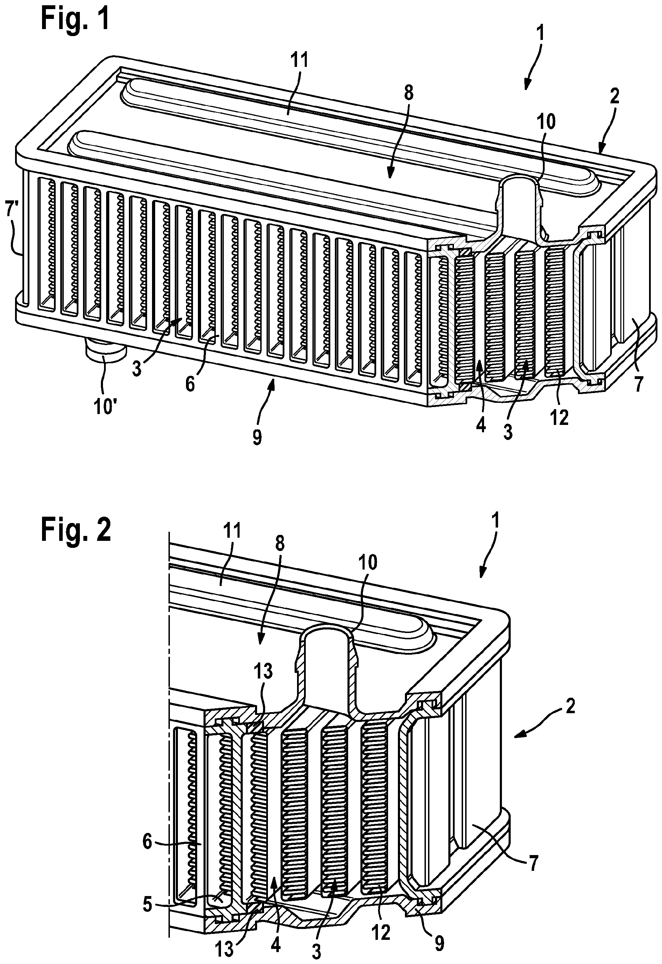

Entsprechend Fig. 1 weist eine erfindungsgemäße Wärmeübertragereinrichtung 1 ein Gehäuse 2 auf, in welchem erste Strömungskanäle 3 für zu kühlendes Gas, Ladeluft, und davon getrennte zweite Strömungskanäle 4 für ein Kühlmedium angeordnet sind (vgl. auch Fig. 2). Dabei ist die Wärmeübertragereinrichtung als Ladeluftkühler ausgebildet. Ein derartiger Ladeluftkühler wird üblicherweise zur Leistungssteigerung eines Verbrennungsmotors vorgesehen und erhöht durch die Abkühlung der angesaugten Luft nach einer Kompression durch eine Ladeeinrichtung, bspw. einen Verdichter, die Luftmenge, die beim Ansaugen in den Zylinder gelangt, so dass bei einem vorgegebenen Kraftstoff-Luftverhältnis, mehr Kraftstoff pro Arbeitsspiel verbrannt werden kann.

Erfindungsgemäß sind die ersten Strömungskanäle 3 aus metallischen Hohlkörpern gebildet, die an ihren Längsendseiten 5, 5' zur Ausbildung eines gemeinsamen Rohrbodens 6, 6' mit Kunststoff umspritzt sind. Die zweiten Strömungskanäle 4 werden dabei von Außenseiten der metallischen Hohlkörper, den beiden Rohrböden 6, 6' sowie einer Innenseite des ansonsten aus Kunststoff ausgebildeten Gehäuses 2 begrenzt.

Im Unterschied zu herkömmlichen Wärmeübertragereinrichtungen ist somit die Wärmeübertragereinrichtung 1 gemäß der Erfindung aus zumindest zwei unterschiedlichen Materialien, nämlich Metall und Kunststoff, ausgebildet, wodurch sich der Herstellungs- bzw. Fertigungsprozess der erfindungsgemäßen Wärmeübertragereinrichtung 1 deutlich vereinfacht und dadurch verbilligt. Insbesondere entfällt ein aufwändiges Justieren, Fixieren und anschließendes Verlöten der einzelnen Teile der Wärmeübertragereinrichtung. Denkbar ist hierbei, dass beim Umspritzen der Längsendseiten 5, 5' der ersten Strömungskanäle 3 nicht nur die Rohrböden 6, 6', sondern gleichzeitig auch zwei, die beiden Rohrböden 6, 6' verbindende Seitenwände 7, 7' in einem Arbeitsgang zusammen mit dem Spritzen der beiden Rohrböden 6, 6' gefertigt werden. Zum Fertigstellen des Gehäuses 2, welches neben den beiden Rohrböden 6, 6', den beiden Seitenwänden 7, 7' noch einen Deckel 8 und einen Boden 9 umfasst, sind somit nur noch der Deckel 8 und der Boden 9 jeweils mit den Rohrböden 6, 6' bzw. den Seitenwänden 7, 7' zu verbinden. Eine derartige Verbindung kann beispielsweise über eine Kühlmittel- und temperaturbeständige Reibschweißverbindung und/oder eine Verklebung erfolgen.

Wie in der Fig. 1 gezeigt, weisen sowohl der Deckel 8 als auch der Boden 9 jeweils einen Kühlmediumanschluss 10, 10' auf, über welchen die Wärmeübertragereinrichtung 1 an einen Kühlkreislauf angeschlossen werden kann. Ein derartiger Kühlmediumanschluss 10, 10' kann beispielsweise in der Art eines herkömmlichen Nippels, Stutzens oder ähnlichem ausgebildet sein. Um neben dem vereinfachten Fertigungsprozess der erfindungsgemäßen Wärmeübertragereinrichtung 1 auch die Teilevielfalt reduzieren zu können, sind der Deckel 8 und der Boden 9 vorzugsweise als Gleichteile ausgebildet und dadurch sowohl als Boden 9 als auch als Deckel 8 verwendbar.

Da die Wärmeübertragereinrichtung 1 im Betrieb unter dem Druck des in der Wärmeübertragereinrichtung 1 fließenden Kühlmediums steht, können am Deckel 8 und/oder am Boden 9 Aussteifungselemente 11, beispielsweise Sicken, angeordnet sein. Alternativ oder zusätzlich ist denkbar, dass der Deckel 8 über zumindest einen, nicht gezeigten, zugbelastbaren Steg mit dem Boden 9 verbunden ist. Sowohl ein derartiger Steg, als auch zumindest ein erwähntes Aussteifungselement 11 begrenzen dabei eine Verformung des Deckels 8 bzw. des Bodens 9, welche unter Umständen durch den Kühlmitteldruck im Inneren der Wärmeübertragereinrichtung 1 hervorgerufen wird. Selbstverständlich können derartige Aussteifungselemente 11 zusätzlich auch an den Seitenwänden 7, 7' angeordnet sein und dadurch eine Verformung dieser begrenzen.

Längsendseitig der ersten Strömungskanäle 3 ist jeweils ein Dichtelement 13 angeordnet, welches eine Abdichtung zwischen den ersten Strömungskanälen 3 und den zweiten Strömungskanälen 4 zusätzlich unterstützt. Ein derartiges Dichtelement 13 kann beispielsweise aus einem TPE-Kunststoff (Thermoplastischem Elastomer oder Thermischem Polyethylen) ausgebildet sein. Demgegenüber ist das Gehäuse 2, insbesondere die Rohrböden 6, 6' und die Seitenwände 7, 7' aus einem Polyamid ausgebildet. Der TPE-Kunststoff für das Dichtelement 13 ist notwendig, um zwischen der Oberfläche der ersten Strömungskanäle 3, d.h. zwischen der Oberfläche der Hohlkörper und dem angespritzten Rohrboden 6, 6' eine dichte Verbindung zu erzielen, da sich Polyamid direkt mit Metall nicht dicht verbinden lässt. Fertigungstechnisch gesehen kann dabei das Dichtelement 13 entweder vor oder nach dem Anspritzen der Rohrböden 6, 6' an die Längsendseiten 5, 5' der ersten Strömungskanäle 3 hergestellt werden.

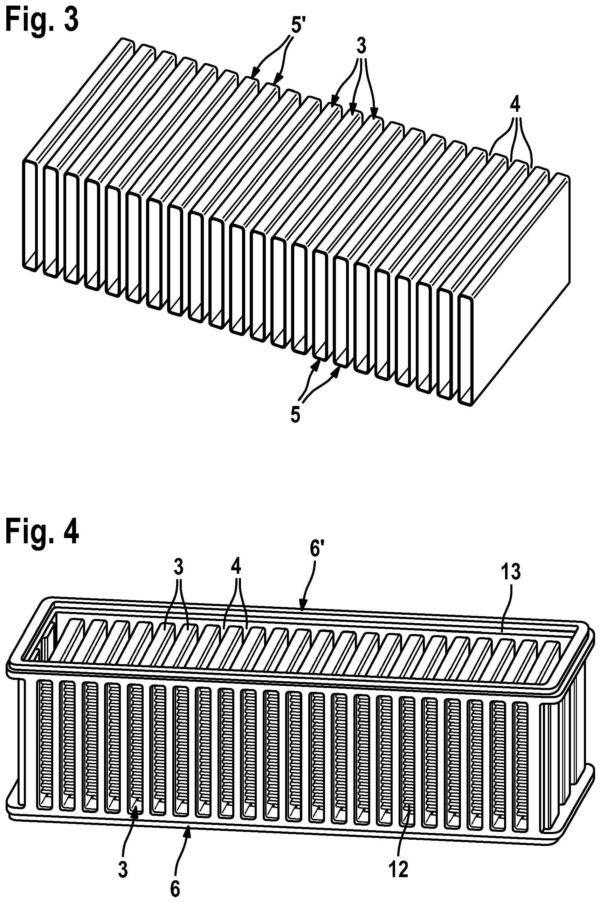

Wie in Fig. 3 gezeigt ist, verlaufen die ersten Strömungskanäle 3 parallel zueinander und weisen einen rechteckförmigen, in den Eckbereichen abgerundeten Querschnitt auf. Dabei weisen alle gezeigten ersten Strömungskanäle 3 einen gleichen Querschnitt und eine gleiche Länge auf, so dass denkbar ist, dass zur Herstellung der ersten Strömungskanäle 3 ein als Stangenware ausgebildeter Hohlkörper auf eine entsprechende Länge abgelängt und die einzelnen Stücke später parallel zu einander, beispielsweise mittels einer kammartigen Justiereinrichtung angeordnet werden.

In Fig. 4 sind die parallel zueinander angeordneten Hohlkörper gezeigt, wobei deren Längsendseiten 5, 5' bereits zur Ausbildung eines gemeinsamen Rohrbodens 6, 6' mit Kunststoff umspritzt sind. Wie oben erwähnt, werden die Seitenwände 7, 7' dabei vorzugsweise im gleichen Arbeitsschritt hergestellt, in welchem auch das An- bzw. Umspritzen der Längsendseiten 5, 5' der ersten Kanäle 3 mit dem Rohrboden 6, 6' erfolgt.

Um die Teilevielfalt weiter reduzieren zu können, ist zudem vorstellbar, dass zumindest ein Teil des Gehäuses 2 ein Bestandteil einer nicht gezeigten Sauganlage einer Brennkraftmaschine ist, wobei insbesondere der Deckel 8, der Boden 9 oder einer der Rohrböden 6, 6' gleichzeitig Bestandteil der Sauganlage sein kann. Eine derartige Ausführungsform gewährleistet eine besonders kompakte Bauweise der erfindungsgemäßen Wärmeübertragereinrichtung 1 und reduziert, wie oben erwähnt, die Teilevielfalt und dadurch die Kosten.

Um die Wärmeübertragung zwischen dem zu kühlenden Gas und dem Kühlmedium zusätzlich steigern zu können, sind die Hohlkörper, d.h. die ersten Strömungskanäle 3 vorzugsweise aus Aluminium ausgebildet, welches sich einerseits durch eine hohe Wärmeleitfähigkeit und andererseits durch eine hohe Korrosionsbeständigkeit auszeichnet. Darüber hinaus ist Aluminium sehr leicht, was sich positiv auf eine Energiebilanz des Kraftfahrzeuges auswirkt. Neben der Verwendung eines geeigneten, d.h. insbesondere hoch wärmeleitenden Materials, können innerhalb der ersten Strömungskanäle 3 zusätzliche Wärmeübertragerelemente 12 angeordnet sein, die beispielsweise nach dem Umspritzen der Längsendseiten 5, 5' der ersten Strömungskanäle 3 mit den Rohrböden 6, 6' in die ersten Strömungskanäle 3 eingeschoben und mit diesen wärmeleitend verbunden werden. Als Wärmeübertragerelemente 12 kommen hierbei, insbesondere mäanderförmige, zwischen zwei Seitenwänden der ersten Strömungskanäle 3 verlaufenden wärmeleitende Folien in Betracht.

## Patentansprüche

1. Ladeluftkühler mit einem Gehäuse (2), in welchem erste Strömungskanäle (3) für zu kühlende Ladeluft und davon getrennte zweite Strömungskanäle (4) für ein Kühlmedium angeordnet sind,
- wobei die ersten Strömungskanäle (3) aus metallischen Hohlkörpern gebildet sind,
- wobei die zweiten Strömungskanäle (4) durch Außenseiten der metallischen Hohlkörper, zwei Rohrböden (6, 6') sowie eine Innenseite des Gehäuses (2) begrenzt sind,
- wobei die ersten Strömungskanäle (3) an ihren Längsendseiten (5, 5') jeweils zur Ausbildung eines solchen gemeinsamen Rohrbodens (6, 6') mit Kunststoff umspritzt sind,
- wobei das Gehäuse (2) aus Kunststoff ausgebildet ist und die beiden Rohrböden (6, 6'), zwei Seitenwände (7, 7'), einen Deckel (8) und einen Boden (9) umfasst, wobei der Deckel (8) und der Boden (9) jeweils einen Kühlmediumanschluss (10) aufweisen.

2. Ladeluftkühler nach Anspruch 1,
**dadurch gekennzeichnet,**
- **dass** zwei, die beiden Rohrböden (6, 6') miteinander verbindende Seitenwände (7, 7') des Gehäuses (2) an die beiden Rohrböden (6, 6') angespritzt sind, oder
- **dass** zwei, die beiden Rohrböden (6, 6') miteinander verbindende Seitenwände (7, 7') des Gehäuses (2) zusammen mit den Rohrböden (6, 6') durch Spritzgießen hergestellt sind.

3. Ladeluftkühler nach Anspruch 1 oder 2,
**dadurch gekennzeichnet,**
**dass** der Deckel (8) und/oder der Boden (9) mit dem restlichen Gehäuse (2) verschweißt ist.

4. Ladeluftkühler nach einem der Ansprüche 1 bis 3,
**dadurch gekennzeichnet,**
**dass** zumindest ein Teil des Gehäuses (2) ein Bestandteil einer Sauganlage einer Brennkraftmaschine ist.

5. Ladeluftkühler nach einem der Ansprüche 1 bis 4,
**dadurch gekennzeichnet,**
- **dass** die ersten Strömungskanäle (3) aus Aluminium hergestellt sind.

6. Ladeluftkühler nach einem der Ansprüche 1 bis 5,
**dadurch gekennzeichnet,**
- **dass** die ersten Strömungskanäle (3) einen rechteckförmigen Querschnitt aufweisen.

7. Ladeluftkühler nach einem der Ansprüche 1 bis 6,
**dadurch gekennzeichnet,**
- **dass** die ersten Strömungskanäle (3) einen gleichen Querschnitt und/oder eine gleiche Länge aufweisen.

8. Ladeluftkühler nach einem der Ansprüche 1 bis 7,
**dadurch gekennzeichnet,**
**dass** innerhalb der Hohlkörper der ersten Strömungskanäle (3) Wärmeübertragerelemente (12) angeordnet sind.

9. Ladeluftkühler nach einem der Ansprüche 1 bis 8,
**dadurch gekennzeichnet,**
**dass** der Deckel (8) und der Boden (9) als Gleichteile ausgebildet sind.

10. Ladeluftkühler nach einem der Ansprüche 1 bis 9,
**dadurch gekennzeichnet,**
**dass** die ersten Strömungskanäle (3) parallel zueinander verlaufen.

11. Ladeluftkühler nach einem der Ansprüche 1 bis 10,
**dadurch gekennzeichnet,**
- **dass** der Deckel (8) und/oder der Boden (9) zumindest ein Aussteifungselement (11) aufweist.

12. Ladeluftkühler nach einem der Ansprüche 1 bis 11,
**dadurch gekennzeichnet,**
- **dass** der Deckel (8) über zumindest einen Steg mit dem Boden verbunden ist.

## Claims

1. Charge air cooler having a housing (2), in which first flow channels (3) for charge air to be cooled and separate second flow channels (4) for a cooling medium are arranged,
- wherein the first flow channels (3) are formed by hollow metallic bodies,
- wherein the second flow channels (4) are bordered by external sides of the hollow metallic bodies, two tube bases (6, 6') and an inner side of the housing (2),
- wherein the first flow channels (3) at their longitudinal end sides (5, 5') are overmoulded with plastic respectively to form such a common tub base (6, 6'),
- wherein the housing (2) is made of plastic and comprises the two tube bases (6, 6'), two side walls (7, 7'), a cover (8) and a base (9), wherein the cover (8) and the base (9) each comprise a cooling medium connection (10).

2. Charge air cooler according to claim 1, **characterised in that**
- two side walls (7, 7') of the housing (2) connecting the two tube bases (6, 6') to one another are integrally moulded onto the two tube bases (6, 6') or
- **in that** two side walls (7, 7') of the housing (2) connecting the two tube bases (6, 6') to one another are manufactured together with the tube bases (6, 6') by injection moulding.

3. Charge air cooler according to claim 1 or 2, **characterised in that** the cover (8) and/or the base (9) is/are welded to the remaining housing (2).

4. Charge air cooler according to any of claims 1 to 3, **characterised in that** at least a portion of the housing (2) is a component of an intake system of an internal combustion engine.

5. Charge air cooler according to any of claims 1 to 4, **characterised in that**
- the first flow channels (3) are made of aluminium.

6. Charge air cooler according to any of claims 1 to 5, **characterised in that**
- the first flow channels (3) have a rectangular cross-section.

7. Charge air cooler according to any of claims 1 to 6, **characterised in that**
- the first flow channels (3) have the same cross section and/or the same length.

8. Charge air cooler according to any of claims 1 to 7, **characterised in that**
- heat transfer elements (12) are arranged inside the hollow bodies of the first flow channels (3).

9. Charge air cooler according to any of claims 1 to 8, **characterised in that** the cover (8) and the base (9) are designed as identical parts.

10. Charge air cooler according to any of claims 1 to 9, **characterised in that** the first flow channels (3) run parallel to one another.

11. Charge air cooler according to any of claims 1 to 10, **characterised in that**
- the cover (8) and/or the base (9) has/have at least one reinforcing element (11).

12. Charge air cooler according to any of claims 1 to 11, **characterised in that**
- the cover (8) is connected to the base by at least one web.

## Revendications

1. Refroidisseur d'air de suralimentation avec un logement (2), dans lequel sont agencés des premiers canaux d'écoulement (3) destinés à de l'air de suralimentation à refroidir et des deuxièmes canaux d'écoulement (4) séparés des premiers et destinés à un fluide de refroidissement,
- dans lequel les premiers canaux d'écoulement (3) sont formés de corps creux métalliques,
- dans lequel les deuxièmes canaux d'écoulement (4) sont délimités par des côtés extérieurs des corps creux métalliques, par deux fonds de tuyau (6, 6') ainsi que par un côté intérieur du logement (2),
- dans lequel les premiers canaux d'écoulement (3) sont couverts de plastique par injection au niveau de leurs côtés d'extrémité longitudinale (5, 5'), à chaque fois afin de former un fond de tuyau (6, 6') commun,
- dans lequel le logement (2) est réalisé en plastique et comprend les deux fonds de tuyau (6, 6'), deux parois latérales (7, 7'), un couvercle (8) et un fond (9), lesquels couvercle (8) et fond (9) comportent chacun un raccord de fluide de refroidissement (10).

2. Refroidisseur d'air de suralimentation selon la revendication 1, **caractérisé**
- **en ce que** deux parois latérales (7, 7') du logement (2) qui relient entre eux les deux fonds de tuyau (6, 6') sont obtenues par injection au niveau des deux fonds de tuyau (6, 6'), ou
- **en ce que** deux parois latérales (7, 7') du logement (2) qui relient entre eux les deux fonds de tuyau (6, 6') sont fabriquées conjointement avec les fonds de tuyau (6, 6') par moulage par injection.

3. Refroidisseur d'air de suralimentation selon la revendication 1 ou 2, **caractérisé en ce que** le couvercle (8) et/ou le fond (9) sont soudés avec le reste du logement (2).

4. Refroidisseur d'air de suralimentation selon l'une quelconque des revendications 1 à 3, **caractérisé en ce qu'**au moins une partie du logement (2) fait partie d'une installation d'aspiration d'un moteur à combustion interne.

5. Refroidisseur d'air de suralimentation selon l'une quelconque des revendications 1 à 4, **caractérisé en ce que**
- les premiers canaux d'écoulement (3) sont fabriqués en aluminium.

6. Refroidisseur d'air de suralimentation selon l'une quelconque des revendications 1 à 5, **caractérisé en ce que**
- les premiers canaux d'écoulement (3) ont une section transversale rectangulaire.

7. Refroidisseur d'air de suralimentation selon l'une quelconque des revendications 1 à 6, **caractérisé en ce que**,
- les premiers canaux d'écoulement (3) ont une section transversale égale et/ou une longueur égale.

8. Refroidisseur d'air de suralimentation selon l'une quelconque des revendications 1 à 7, **caractérisé en ce que**,
des éléments de transfert thermique (12) sont agencés à l'intérieur des corps creux des premiers canaux d'écoulement (3).

9. Refroidisseur d'air de suralimentation selon l'une quelconque des revendications 1 à 8, **caractérisé en ce que**,
le couvercle (8) et le fond (9) sont réalisés comme des pièces identiques.

10. Refroidisseur d'air de suralimentation selon l'une quelconque des revendications 1 à 9, **caractérisé en ce que**,
les premiers canaux d'écoulement (3) s'étendent parallèlement les uns aux autres.

11. Refroidisseur d'air de suralimentation selon l'une quelconque des revendications 1 à 10, **caractérisé en ce que**,
- le couvercle (8) et/ou le fond (9) comportent au moins un élément de rigidification (11).

12. Refroidisseur d'air de suralimentation selon l'une quelconque des revendications 1 à 11, **caractérisé en ce que**,
- le couvercle (8) est relié au fond par l'intermédiaire d'au moins une traverse.
